# EUROPEAN PATENT SPECIFICATION

(11) **EP 3 835 239 B1**
(45) Date of publication and mention of the grant of the patent: **01.06.2022**
(21) Application number: 19215146.2
(22) Date of filing: 11.12.2019
(51) Int. Cl.: B65G 41/00

(54) **MATERIAL HANDLING EQUIPMENT**
MATERIALHANDHABUNGSAUSRÜSTUNG
ÉQUIPEMENT DE MANIPULATION DE MATÉRIAU

(43) Date of publication of application: 16.06.2021
(73) Proprietor: Edge Innovate (NI) Ltd, Dungannon, Tyrone BT71 4DT (GB)
(72) Inventor: RICE, Matthew Gerald, Dungannon, Tyrone BT71 6WQ (GB)
(74) Representative: MacLachlan & Donaldson

(56) References cited:
- CA-A1- 3 040 151
- GB-A- 1 514 340

## Description

The present invention relates to material handling equipment, in particular to mobile bulk material stackers that are transported in 12.2 m (40 ft) shipping containers.

### Background to the Invention

Large machinery such as material handling equipment is constrained both by the need to be of a size that can travel by road and of a size that can be transported to a customer in one or more shipping containers.

Typical equipment used to handle bulk materials includes stockpiling machinery which may have radial ability and additionally may be mobile or tracked. For example, stackers are conventionally employed to stockpile bulk materials such as gravel, sand, grain, coal and aggregate. Radial stackers have conveyors which swing around in a radius to stockpile material in an arc, allowing substantially more material to be stacked than is possible using a conventional stationary stacker that permits only a conical stack. Telescoping conveyors also permit more material to be stacked as the conveyor is extended or retracted during stockpiling operations.

All stockpiling machinery typically includes a hopper at one end to accept material. The material then travels along a conveyor, usually on a belt, and is discharged at the other end of the stacker. Wheels or tracks are disposed between the hopper and discharge end of the stacking conveyor. These wheels or tracks permit the stacker to be manoeuvred around the work site. Typically, stackers may be folded over themselves and be ready for road transport, for example by low loader trailer, in relatively little time.

Transport of stockpiling machinery from manufacturer in one country to customer in another country typically takes place in shipping containers. Whilst conversion of such stockpiling machinery from working mode to road transport mode and vice versa is relatively simple, this is not the case for conversion from either of these modes to container transport mode.

Due to the working mode length that is required, prior art stackers are each individually packed into at least one shipping container in parts to be assembled by the customer. Lifting equipment such as cranes is required in order to pack these loose parts into the container and again to remove them prior to assembly. The process of disassembly and subsequent packing of prior art stockpiling machinery parts as well as the process of removing and reassembling these parts into either a mode suitable for road transport or a final working mode each take at least 24 hours and more typically up to 4 days.

It is a therefore an object of the present invention to provide a stockpiling machine with a conveyor of working length longer than 21.3 m (70 ft) and with a greatly reduced setup time of approximately one hour or less, wherein the stockpiling machine fits into a single container and, upon reaching its destination, can be deployed without the need for heavy duty lifting equipment such as cranes.

CA 3040151 A1 discloses a tracked mobile radial stacker that includes a conveyor having a rear end with a pivot pad, a 5th wheel connection, a hopper for receiving bulk material to be stacked, and a forward portion designed to discharge the bulk material to form a stack. Also included are a continuous track mounted to a frame, and a pair of pivotable wheels mounted to the frame, the pivotable wheels being pivotable between raised and lowered positions and being radially disposed when in the lowered position. An arm may be mounted between the frame and the forward portion of the conveyor, the arm having an underside. A bogey may be mounted to the underside of the arm, the bogey including a plurality of longitudinally-disposed bogey wheels. The pivotable wheels may raise the tracks off the ground when the pivotable wheels are in the radially-disposed, lowered position to facilitate radial shifting of the conveyor with the conveyor pivoting on the pivot pad to form an arc-shaped stack, and when the bogey is in its lowered position the continuous track may be elevated off the ground. CA 3040151 A1 discloses a stacker according to the preamble of claim 1.

### Summary of the Invention

The present invention relates to a stacker according to claim 1 for stockpiling bulk material, wherein the stacker has a conveyor longer than 21.3 m (70 ft) and is convertible from a container mode in which it fits inside a 12.2 m (40 ft) shipping container to a working mode in approximately one hour or less and without the need for heavy lifting equipment such as cranes.

Accordingly, the present invention is a stacker for stockpiling bulk material, the stacker comprising: a chassis provided with either wheels or tracks; a conveyor; and a powered, telescoping cylinder leg for moving the conveyor with respect to the chassis, wherein the working length of the conveyor is at least 21.3 m (70 ft) long, and wherein the telescoping cylinder leg is mounted at one end to the conveyor and at the other end is removably mountable to the chassis from a first mounting position for transport of the stacker in a shipping container to a second mounting position for transport of the stacker by road.

The stacker fits inside a single 12.2 m (40 ft) shipping container.

This provides significant advantages over prior art machinery which require disassembly to be packed into a container. The stacker according to the invention easily transforms from container mode to road transport mode and vice versa. The time to setup for the end user is thus greatly reduced and the build procedure is safer as there are less steps. Additional equipment such as a crane is not required in order to pack the stacker into the container, nor to remove the stacker from the container, nor for transformation of the stacker from container mode to road transport mode or working mode. This substantially reduces costs. In order to transform the stacker from transport mode to a working setup, the only tools required are general hand tools such as a hammer, pinch bar, spanners and the like.

The conveyor is configured to carry bulk material along an elevating path from a low position adjacent one end of the chassis, preferably a rear end, to a higher position adjacent the other end of the chassis, preferably a front end.

In a preferred embodiment, the conveyor is at least approximately 22.9 m (75 ft) long, particularly preferably at least approximately 23.8 m (78 ft) long, e.g. approximately 30.5 m (100 ft) long.

The conveyor is preferably a folding conveyor, that is the conveyor preferably comprises two or more sections which pivot with respect to each other such that the conveyor may be folded over itself for storage, particularly preferably wherein the conveyor further comprises a fold linkage for powering this pivot action, i.e. for unfolding of the conveyor, folding of the conveyor, or both. For example, the conveyor preferably comprises at least a head section and a tail section and, when unfolded, is designed to carry bulk material along an elevating path from a low position adjacent the tail section, to a higher position adjacent the head section.

The conveyor preferably has a telescoping section, particularly preferably the conveyor is a folding conveyor with a telescoping section, e.g. a telescoping head section.

In a preferred embodiment, the front end of the chassis is provided with wheels, particularly preferably wherein a continuous track system is located at a rear end of the chassis, the continuous track system having a pair of driven, parallel tracks.

In another preferred embodiment, the chassis is provided with a continuous track system, particularly preferably toward the middle of the chassis.

The telescoping cylinder leg preferably includes at least one hydraulic ram for increasing and decreasing the effective length of the leg, particularly preferably two hydraulic rams. However, this is not to be considered limiting and other means of effecting telescopic movement such as an electric actuator, mechanical jack etc. may be used in addition to or instead of a hydraulic ram.

For transport in a shipping container, the telescoping cylinder leg is mounted to the chassis in the first mounting position, preferably by pinning with one or more bolts or pins. This allows the overall length of the machine to be compressed to within the limits of a single shipping container. When mounted in this position, the conveyor is preferably in a substantially horizontal position.

Furthermore, when mounted in this first mounting position, the telescoping cylinder leg can be extended to slide the conveyor forwards with respect to the chassis or retracted to slide the conveyor backwards with respect to the chassis. The first mounting position is preferably located towards the centre of the chassis.

In order to transform the stacker from container mode to road transport mode, once the stacker has arrived at its destination, it is removed from the container, preferably using its own power. For example, if the stacker is a tracked stacker it may be tracked out of the container. Alternatively, for example if the stacker is a mobile stacker, i.e. wheeled rather than tracked, it may be towed out of the container using a self-propelled vehicle such as a forklift truck, lorry or the like. A hopper or other feed system may be mounted to the stacker at this time.

When the stacker has been removed from the container and the telescopic leg is still mounted in the first mounting position, the telescopic leg is extended, moving the conveyor forward such that the total length of the stacker increases. The conveyor is then preferably fixed to the chassis, for example by pinning or bolting, to provide a pivot point, e.g. at the rear end of the chassis.

In order to transform the stacker into working mode, for example for use of the stacker at a site such as a quarry, the telescoping cylinder leg is mounted in the second mounting position. When mounted in this position, the telescoping cylinder leg can be extended to raise the conveyor to one or more different working angles. The second mounting position is preferably located towards a front end of the chassis such that the telescopic leg will have sufficient power to raise and lower the conveyor for everyday use. For example, for mobile stackers with wheels at the front end of the chassis, the second mounting position is preferably adjacent the wheels and for tracked stackers with tracks at the front end of the chassis, the second mounting position is preferably adjacent the tracks.

In another preferred embodiment, the conveyor comprises a head section, a mid section and a tail section. In this embodiment, the head section and mid section of the folding conveyor are connected to each other such that the head section can pivot with respect to the mid section, particularly preferably wherein the conveyor further comprises a head fold linkage for powering this pivot action, e.g. for unfolding and folding of the head section of the conveyor. Additionally, the tail section and mid section of the folding conveyor are connected to each other such that the tail section can pivot with respect to the mid section, particularly preferably wherein the conveyor further comprises a tail fold linkage for powering this pivot action, e.g. for folding and unfolding the tail section of the conveyor.

Additionally, or alternatively, the mid section of the folding conveyor is preferably approximately the same length as the combined length of the head and tails sections. In a particularly preferred embodiment, the length of the head section of the folding conveyor is approximately 8.75 m (28 ft 8"), the tail section is approximately 3.1 m (10 ft 2") and the mid section is approximately 11.9 m (39 ft). However, this is not to be considered limiting and the mid section may be shorter or longer than the combined length of the head and tails sections. For example, longer conveyors can be accommodated by overlapping the head and tail sections on top of the mid section or by including telescoping sections.

In a preferred embodiment, the stacker further comprises a power unit such as an engine. In this embodiment, the first mounting position is preferably located in front of the power unit for weight distribution purposes.

### Brief Description of the drawings

Certain preferred embodiments of the present invention will now be described, by way of example only, with reference to the accompanying drawings in which:
Figure 1 shows a perspective view of a preferred embodiment of a tracked, portable stacker according to the invention in working mode;
Figure 2 shows a side view of the stacker shown in Figure 1;
Figure 3 shows a side view of the stacker in Figure 1 in container mode within a 12.2 m (40 ft) shipping container; and
Figures 4a to 4g show the steps required to change a stacker according to the invention from the 12.2 m (40 ft) shipping container mode as shown in Figure 3 to the working mode shown in Figure 2;
Figure 5a shows a preferred telescopic leg in the retracted position; and
Figure 5b shows the telescopic leg of Figure 5a in the extended position.

### Detailed Description

Various embodiments of the present invention will be described in detail with reference to the drawings, where like reference numeral represent like parts and assemblies throughout the several views.

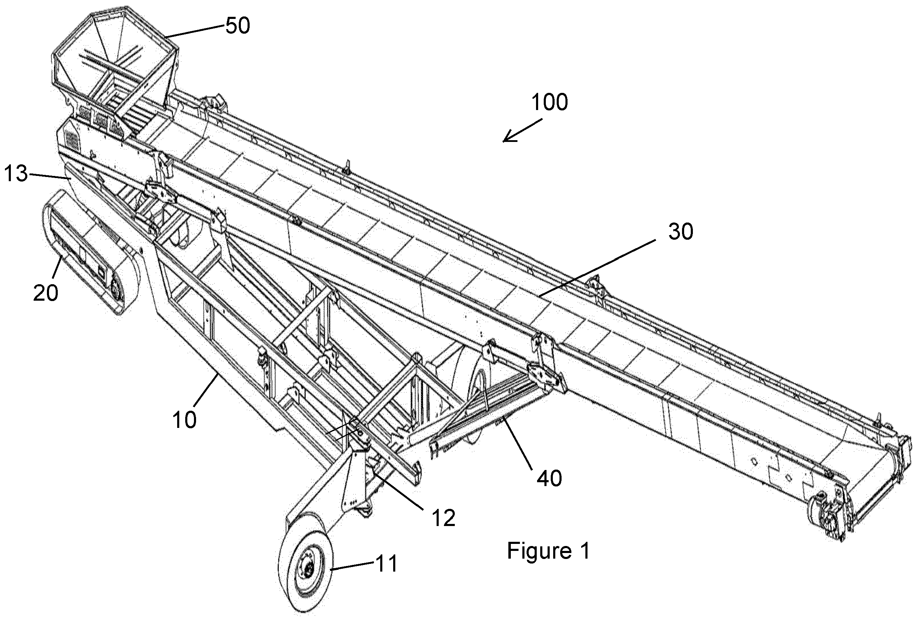

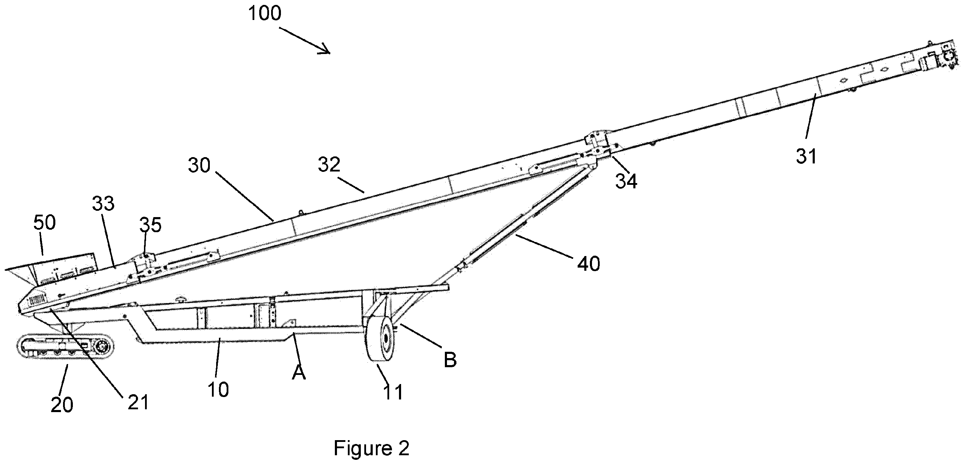

Referring to the drawings, Figures 1 and 2 show a preferred stacker according to the invention, generally referred to herein by reference numeral 100, in working mode. As shown in Figures 1 and 2, stacker 100 is a portable radial stacker for stockpiling bulk material and comprises a chassis 10 with two wheels 11 at front end 12 of chassis 10 and continuous track system 20 at rear end 13 thereof.

Folding conveyor 30 is mounted to chassis 10 and has head section 31, mid section 32 and tail section 33. Folding conveyor 30 is designed to carry bulk material along an elevating path from tail section 33 to head section 31. Hopper 50 is shown mounted to tail section 31 in Figures 1 and 2.

Head section 31 and mid section 32 are connected to each other such that head section 31 can pivot with respect to mid section 32. In the preferred embodiment shown in Figures 1 and 2 conveyor 30 further comprises head fold linkage 34 for powering this pivot action, i.e. for unfolding and folding of head section 31.

Tail section 33 and mid section 32 are connected to each other such that tail section 33 can pivot with respect to mid section 32. In the preferred embodiment shown in Figures 1 and 2 conveyor 30 further comprises tail fold linkage 35 for powering this pivot action, i.e. for folding and unfolding tail section 33.

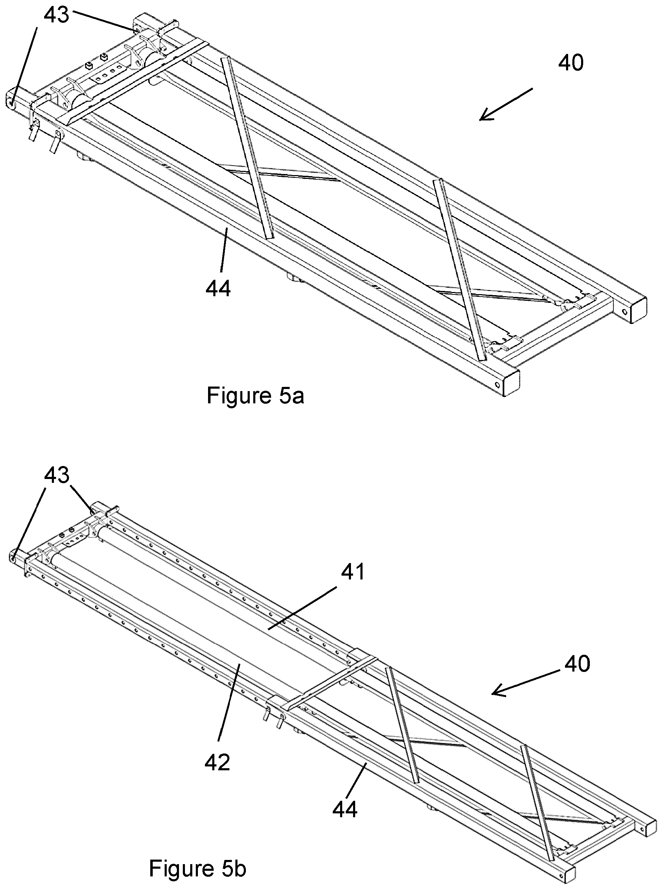

Powered, telescoping cylinder leg 40 is mounted at one end to the underside of conveyor 30 at the end of mid section 32 adjacent head section 31. The other end of telescoping cylinder leg 40 is removably mountable to chassis 10 from first mounting position A located towards the centre of chassis 10 to second mounting position B located at front end 12 of chassis 10 adjacent wheels 11. Preferred telescoping cylinder leg 40 is shown in detail in Figures 5a and 5b.

In the preferred embodiment shown in Figures 5a and 5b, telescopic cylinder leg 40 comprises two parallel rams 41, 42 within frame 44. Apertures 43 at one end of frame 44 are for accepting pins for mounting leg 40 to chassis 10 at mounting position A or B.

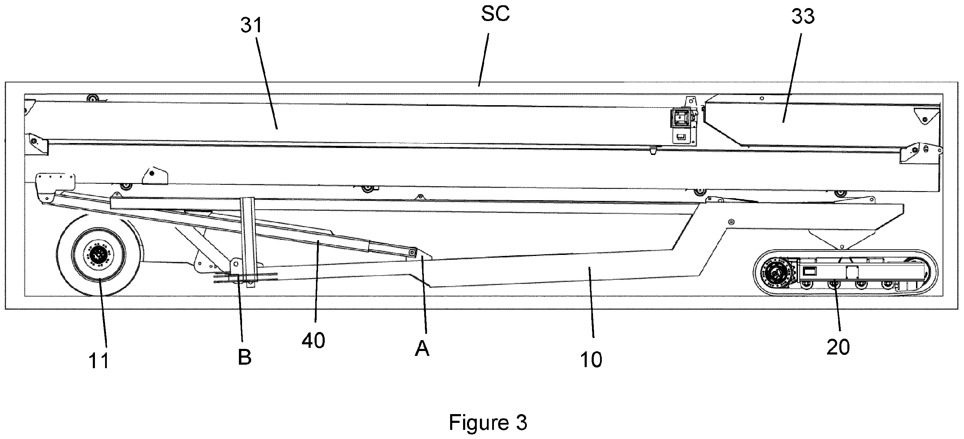

For transport in a single shipping container SC, telescoping cylinder leg 40 is mounted to chassis 10 in first mounting position A, preferably by pinning through frame 44. This allows the overall length of stacker 100 to be compressed to within the limits of shipping container SC. As shown in Figure 3, when telescoping cylinder leg 40 is mounted in first mounting position A, conveyor 30 is in a substantially horizontal position.

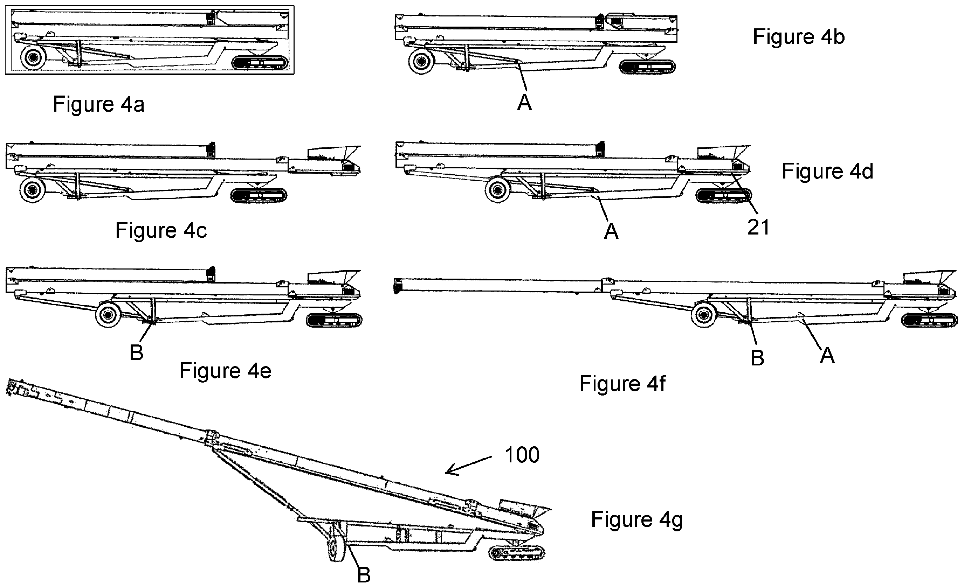

When mounted in first mounting position A, telescoping cylinder leg 40 is for sliding conveyor 30 forwards or backwards with respect to chassis 10, e.g. parallel to chassis 10. When mounted in second mounting position B, telescoping cylinder leg 40 is for adjusting the angle of conveyor 30 such that conveyor 30 may be moved from a lowered position for transport to various raised positions for stacking operations. Leg 40 is shown mounted in second mounting position B in Figures 1 and 2 as well as in Figures 4e to 4g.

In the preferred stacker according to the invention as shown in the Figures, mid section 32 is the same length as the combined length of head section 31 and tail section 33.

Figure 3 shows stacker 100 within 12.2 m (40 ft) shipping container SC. Leg 40 is shown mounted in first mounting position A and conveyor 30 is folded with head section 31 and tail section 33 folded over mid section 32. Figure 4a is simply a smaller copy of Figure 3.

Referring now to Figures 4a to 4g, in order to transform stacker 100 from the container mode as shown in Figure 3 to the working mode shown in Figure 2, stacker 100 is first tracked from shipping container SC using its own power. Once out of the shipping container, as shown in Figure 4b, tail section 33 of conveyor 30 stacker 100 is unfolded and hopper 50 mounted thereon as shown in Figure 4c.

Telescopic leg 40, still mounted in first mounting position A, is then extended to move conveyor 30 horizontally along stacker 100 so that hopper 50 is above tracks 20 and head section linkage 35 is moved further away from wheels 11. As a result, the total length of stacker 100 increases. This is shown in Figure 4d. Tail section 33 is then fixed to chassis 10 through pivot point 21 using pins.

Telescopic leg 40 is then unpinned from first mounting position A, retracted and mounted to chassis 10 at second mounting position B as shown in Figure 4e. Stacker 100 may be transported by road when in the transport mode shown in Figure 4e.

Once on site, head section 31 is unfolded as shown in Figure 4f. Telescopic leg 40 is then extended to raise head section 31 to a preferred discharge height as shown in Figure 4g and is then in working mode. Figure 4g is simply a smaller copy of Figure 2.

In the preferred embodiment shown in the Figures, folding conveyor 30 is approximately 23.8 m (78 ft) long with mid section 32 being approximately 11.9 m (39 ft) long, head section 31 approximately 8.75 m (28 ft 8") long and tail section 33 approximately 3.1 m (10 ft 2") long. However, this is not to be considered limiting and folding conveyors of at least 21.3 m (70 ft) with sections of alternate lengths to those above are considered to be within the scope of the invention.

It is to be understood that the invention is not limited to the specific details described herein which are given by way of example only and that various modifications and alterations are possible without departing from the scope of the invention as defined in the appended claims.

## Claims

1. A stacker (100) for stockpiling bulk material, the stacker comprising:
a chassis (10) provided with wheels (11) and tracks (20) or wheels or tracks;
a conveyor (30); and
a powered, telescoping cylinder leg (40) for moving the conveyor with respect to the chassis (10),
wherein the conveyor (30) is at least 21.3 m (70 ft) long; and
**characterised in that** the telescoping cylinder leg (40) is mounted at one end to the conveyor (30) and at the other end is removably mountable to the chassis (10) from a first mounting position (A) for transport in a shipping container (SC) to a second mounting position (B) for transport by road and when mounted in the first mounting position (A), the telescoping cylinder leg (40) can be retracted to slide the conveyor (30) backwards with respect to the chassis (10) for transport in the shipping container (SC) and when mounted in the first mounting position (A), the telescoping cylinder leg (40) can be extended to slide the conveyor (30) forwards with respect to the chassis (10) and mounted to the chassis (10) at the second mounting position (B) for transport by road.

2. The stacker of claim 1, wherein the first mounting position (A) is located towards the centre of the chassis (10) and the second mounting position (B) is located at the front end (12) of the chassis (10).

3. The stacker of claim 1 or claim 2, wherein the conveyor (30) is approximately 23.75 m (78 ft) long.

4. The stacker of any one of claims 1 to 3, wherein the chassis (10) is provided with wheels (11) at a front end (12) thereof.

5. The stacker of any one of the preceding claims, wherein the chassis is provided with tracks toward the middle thereof.

6. The stacker of any one of the preceding claims, wherein the chassis is provided with wheels at a rear end thereof.

7. The stacker of any one of claims 1 to 5, wherein the chassis (10) is provided with tracks (20) at a rear end (13) thereof.

8. The stacker of any one of the preceding claims, wherein the conveyor (30) is a folding conveyor.

9. The stacker of claim 8, wherein the conveyor (30) further comprises a fold linkage (34, 35) for powering the folding or unfolding of the conveyor, or both.

10. The stacker of any one of the preceding claims, wherein the conveyor (30) is a telescoping conveyor.

11. The stacker of any one of the preceding claims, wherein the telescoping cylinder leg (40) comprises two hydraulic rams (41, 42).

## Patentansprüche

1. Stapler (100) zum Aufstapeln von Schüttgut, wobei der Stapler Folgendes umfasst:
ein Fahrgestell (10), das mit Rädern (11) und Ketten (20) oder Rädern oder Ketten bereitgestellt ist;
einen Förderer (30); und
ein angetriebenes Teleskopzylinderbein (40) zum Bewegen des Förderers in Bezug auf das Fahrgestell (10),
wobei der Förderer (30) zumindest 21,3 m (70 Fuß) lang ist; und
**dadurch gekennzeichnet, dass** das Teleskopzylinderbein (40) an einem Ende an dem Förderer (30) montiert ist und an dem anderen Ende entfernbar an dem Fahrgestell (10) von einer ersten Montageposition (A) für Transport in einem Versandcontainer (SC) in eine zweite Montageposition (B) für Transport auf der Straße montierbar ist, und wenn es in der ersten Montageposition (A) montiert ist, das Teleskopzylinderbein (40) eingezogen werden kann, um den Förderer (30) nach hinten in Bezug auf das Fahrgestell (10) für Transport in dem Versandcontainer (SC) zu verschieben und wenn es in der ersten Montageposition (A) montiert ist, das Teleskopzylinderbein (40) ausgefahren werden kann, um den Förderer (30) nach vorne in Bezug auf das Fahrgestell (10) zu verschieben und montiert an dem Fahrgestell (10) an der zweiten Montageposition (B) für Transport auf der Straße.

2. Stapler nach Anspruch 1, wobei sich die erste Montageposition (A) in Richtung der Mitte des Fahrgestells (10) befindet und sich die zweite Montageposition (B) an dem vorderen Ende (12) des Fahrgestells (10) befindet.

3. Stapler nach Anspruch 1 oder Anspruch 2, wobei der Förderer (30) ungefähr 23,75 m (78 Fuß) lang ist.

4. Stapler nach einem der Ansprüche 1 bis 3, wobei das Fahrgestell (10) an einem vorderen Ende (12) davon mit Rädern (11) bereitgestellt ist.

5. Stapler nach einem der vorhergehenden Ansprüche, wobei das Fahrgestell zu der Mitte davon hin mit Ketten bereitgestellt ist.

6. Stapler nach einem der vorhergehenden Ansprüche, wobei das Fahrgestell an einem hinteren Ende davon mit Rädern bereitgestellt ist.

7. Stapler nach einem der Ansprüche 1 bis 5, wobei das Fahrgestell (10) an einem hinteren Ende (13) davon mit Ketten (20) bereitgestellt ist.

8. Stapler nach einem der vorhergehenden Ansprüche, wobei der Förderer (30) ein Faltförderer ist.

9. Stapler nach Anspruch 8, wobei der Förderer (30) ferner ein Faltgestänge (34, 35) zum Antreiben des Faltens oder Entfaltens des Förderers oder von beiden umfasst.

10. Stapler nach einem der vorhergehenden Ansprüche, wobei der Förderer (30) ein Teleskopförderer ist.

11. Stapler nach einem der vorhergehenden Ansprüche, wobei das Teleskopzylinderbein (40) zwei Hydraulikkolben (41, 42) umfasst.

## Revendications

1. Empileur (100) destiné à la mise en stock de matériaux en vrac, l'empileur comprenant :
un châssis (10) doté de roues (11) et de chenilles (20) ou de roues ou de chenilles ;
un transporteur (30) ; et
une jambe à cylindre télescopique motorisée (40) destinée à déplacer le transporteur par rapport au châssis (10),
ledit transporteur (30) mesurant au moins 21,3 m (70 pieds) de long ; et
**caractérisé en ce que** la jambe à cylindre télescopique (40) est montée au niveau d'une extrémité sur le transporteur (30) et peut être montée de manière amovible au niveau de l'autre extrémité sur le châssis (10) à partir d'une première position de montage (A) pour le transport dans un conteneur d'expédition (SC) vers une seconde position de montage (B) pour le transport par route et lorsqu'elle est montée dans la première position de montage (A), la jambe à cylindre télescopique (40) peut être rétractée pour faire coulisser le transporteur (30) vers l'arrière par rapport au châssis (10) pour le transport dans le conteneur d'expédition (SC) et lorsqu'elle est montée dans la première position de montage (A), la jambe à cylindre télescopique (40) peut être étendue pour faire coulisser le transporteur (30) vers l'avant par rapport au châssis (10) et montée sur le châssis (10) au niveau de la seconde position de montage (B) pour le transport par route.

2. Empileur selon la revendication 1, ladite première position de montage (A) étant située vers le centre du châssis (10) et ladite seconde position de montage (B) étant située au niveau de l'extrémité avant (12) du châssis (10).

3. Empileur selon la revendication 1 ou la revendication 2, ledit transporteur (30) mesurant environ 23,75 m (78 pieds) de long.

4. Empileur selon l'une quelconque des revendications 1 à 3, ledit châssis (10) étant doté de roues (11) au niveau d'une extrémité avant (12) de celui-ci.

5. Empileur selon l'une quelconque des revendications précédentes, ledit châssis étant doté de chenilles vers le milieu de celui-ci.

6. Empileur selon l'une quelconque des revendications précédentes, ledit châssis étant doté de roues au niveau d'une extrémité arrière de celui-ci.

7. Empileur selon l'une quelconque des revendications 1 à 5, ledit châssis (10) étant doté de chenilles (20) au niveau d'une extrémité arrière (13) de celui-ci.

8. Empileur selon l'une quelconque des revendications précédentes, ledit transporteur (30) étant un transporteur pliable.

9. Empileur selon la revendication 8, ledit transporteur (30) comprenant en outre une tringlerie de pliage (34, 35) pour motoriser le pliage et/ou le dépliage du transporteur.

10. Empileur selon l'une quelconque des revendications précédentes, ledit transporteur (30) étant un transporteur télescopique.

11. Empileur selon l'une quelconque des revendications précédentes, ladite jambe à cylindre télescopique (40) comprenant deux vérins hydrauliques (41, 42).
